Europäisches Patentamt

(19) European Patent Office    (11) Publication number:    **0 045 211**

Office européen des brevets    **B1**

(12) **EUROPEAN PATENT SPECIFICATION**

(45) Date of publication of patent specification: **17.09.86**    (51) Int. Cl.⁴: **B 29 C 61/06,** B 29 C 63/42,
                                                                   **H 01 B 7/36**

(21) Application number: **81303441.0**

(22) Date of filing: **27.07.81**

(54) **Marker sleeve assembly and process for producing the same.**

(30) Priority: **28.07.80 GB 8024621**

(43) Date of publication of application:
**03.02.82 Bulletin 82/05**

(45) Publication of the grant of the patent:
**17.09.86 Bulletin 86/38**

(84) Designated Contracting States:
**AT BE CH DE FR IT LI NL SE**

(56) References cited:
**DE-A-1 924 740**
**FR-A-1 186 225**
**FR-A-1 552 515**
**US-A-3 087 845**
**US-A-3 565 983**
**US-A-3 926 311**
**US-A-4 032 010**

The file contains technical information
submitted after the application was filed and
not included in this specification

(73) Proprietor: **RAYCHEM LIMITED**
**Rolls House 7, Rolls Buildings Fetter Lane**
**London, EC4 1NL (GB)**

(72) Inventor: **Changani, Pushpkumar**
**Ila Dores Road**
**Upper Stratton Swindon Wiltshire (GB)**
Inventor: **Peacock, Donald George**
**Paradise Cottage**
**Kempsford Gloucestershire (GB)**
Inventor: **Roberts, David**
**Stonestack 10, Crabtree Drive**
**Givons Grove Leatherhead Surrey (GB)**

(74) Representative: **Jay, Anthony William et al**
**Raychem Limited Intellectual Property Law**
**Department Faraday Road**
**Dorcan Swindon SN3 5HH Wiltshire (GB)**

Courier Press, Leamington Spa, England.

## Description

The present invention concerns heat-recoverable polymeric articles, that is to say, articles the dimensional configuration of which may be made to change by subjecting to heat, and in particular, to such articles for use as identifying markers and to a process for this manufacture.

Identifying markers are frequently employed for identifying the components of complicated equipment particularly complex electrical equipment, for example complex wiring systems in aircraft. One such marker system has taken the form of an assembly of heat-recoverable sleeves which may be marked in any manner and which may be slipped over the component to be identified and heat-recovered thereon. Such assembly comprises an elongate spine provided on one side thereof with a plurality of transversely extending spaced apart support bars on each of which is disposed a heat-recoverable marker sleeve (see e.g. US—A—4032010). Such an assembly facilitates marking and sequencing of the marker sleeves and if necessary furthermore enables the marker sleeves to be subjected to heat treatment to fix or render permanent the markings on the sleeve without risk of premature heat-recovery.

Whilst such marker sleeve assembly has many attributes, the manufacture thereof is complex. The marker sleeves are manufactured from polymeric tubing which is rendered heat-recoverable by cross-linking the tubing, heating the tubing to a temperature above the crystalline melting point or softening point of the polymeric material, deforming the tube radially outwardly and cooling the tubing in the deformed state. In use, since the deformed state of the article is heat unstable, application of heat will cause the tubing to revert to the original heat stable configuration. The tubing so produced is cut down into a plurality of short sleeves each of which are then individually disposed on the support bars of the elongate spine and located thereon by slight heat recovery, the sleeves so located still retaining a substantial residual amount of heat recovery.

In addition to the complex manufacturing process of the known marker sleeve assemblies, the known sleeves shrink only when heated to temperatures above the softening point of the polymeric material forming the sleeve.

The present invention has as an object to provide a process for the production of an alternative type of heat-recoverable marker sleeve assembly which is less complex, and therefore less expensive, than that hitherto employed.

Accordingly, the present invention provides a process for the production of a marker sleeve assembly comprising a plurality of marker sleeves that are capable of receiving printed characters, which comprises deforming a fusion bondable web of polymeric material at a temperature below the softening point of the material to render the web heat-recoverable, bonding together, preferably by fusion-bonding, parts of the web or parts of the web and at least one other fusion-bondable polymeric web to define a plurality of radially inwardly heat-recoverable marker sleeves, that are disposed in side-by-side relationship and are separable, and cross-linking the resulting assembly so as to cross-link the bond-forming parts of the deformed web(s) to each other.

By the expression "fusion bonding" as employed herein is meant a process wherein the materials in the parts to be fused together are caused to flow together, e.g. welding by heat, solvent, or ultrasonic or radio frequency energy, perferably with the application of pressure, to form a homogeneous bridge between the parts in the absence of any discernible interface therebetween. Additional material may be present in the bond which is cross-linked to the material of the web(s).

The fusion step may be effected before or after deformation, preferably however after deformation.

Preferably, the marker sleeve assembly is produced in a "tear-off" arrangement being provided with lines of weakness, e.g. perforations, facilitating separation and removal of individual marker sleeves from the assembly, as required.

The marker sleeves may be provided with identifying characters or other markings at any stage in the production process, e.g. on the polymeric web before or after the bonding step. Alternatively, the sleeves may be produced devoid of identifying markings, these to be provided by the user, e.g. by a typing operation.

In a first preferred form of the invention, the assembly is produced from at least one pair of longitudinally expanded fusion bondable sheets which are superimposed and welded together laterally thereof at longitudinally spaced apart intervals. Preferably the weld seams defining the laterally extending marker sleeve are provided with lines of weakness, e.g. are perforated to facilitate separation of the sleeves.

If it is desirable to enable individual marker sleeves to be removed out of sequence without disturbing the sequence of the remaining sleeves, then provision may be made for a retaining spine along one edge of the assembly. For exmaple the assembly may be provided with a longitudinally extending line of weakness, the marker sleeves so being bonded by one free edge, the welded seams and said longitudinally extending line of weakness. In such case, said line of weakness may comprise a series of slits, each slit extending across the width of the marker sleeves the welded seams forming a bridge between the sleeves and the spine. In such case also, one sheet may advantageously be wider than the other of the or each pair of sheets, the spine in such case consisting of the one edge region of the wider sheet. Forms of marker sleeve assembly that include such a retaining spine are described and claimed in our copending European Patent Application EP—A—138258.

In such first preferred form, said pair(s) of polymeric sheets may be attached to non-heat-recoverable support means to restrain heat-recovery of the marker sleeves under heat treatment to fix or render permanent markings on the sleeves. Such support means may comprise a strip to which, or, to each side of which, a pair of polymeric sheets as hereinbefore described may be secured, at least at the extremities thereof.

In a second preferred form of the invention, the assembly is produced from a single longitudinally expanded sheet which is folded laterally thereof at spaced apart intervals and welded laterally along the base of each fold to provide a plurality of spaced apart laterally extending marker sleeves. Preferably in such form also, perforations are provided along the weld seams to facilitate removal of the sleeves. Such form has the advantage that sleeves may be removed at any position in the assembly permitting the assembly to remain otherwise intact.

In a third preferred form of the invention, the assembly is produced from at least one pair of longitudinally expanded fusion bondable polymeric sheets which are superimposed onto at least one side of a non-expanded polymeric support strip said pair of sheets being welded together and to the support strip laterally of the sheets at longitudinally spaced apart intervals. Preferably the weld seams defining the laterally extending sleeves are perforated to facilitate their separation. Such third preferred form has the advantage that sleeves at any position in the assembly may be removed whilst permitting the assembly otherwise to remain intact.

Further, by appropriate choice of support strip material the assembly may be subjected to heat treatment to fix or render permanent the identifying markings on the sleeves, without causing the sleeves to loose their heat-recovery, e.g. by choice of a support strip material that remains semi-rigid at the heat treatment temperature. When a support strip is employed, a pair of expanded polymeric sheets may be welded to each face thereof to provide marker sleeves on both faces.

The assembly may be provided longitudinally thereof with a plurality of indexing slots or apertures adapted to be engageable with the teeth of a sprocket mechanism to be advanceable through a printer, e.g. a typewriter, and so facilitate marking. For example in the case where the assembly is provided with a longitudinally extending exposed spine or support strip, the indexing slots or apertures may be provided in said spine or strip.

The process is applicable to both crystalline and non-crystalline polymers, the softening point, by which is meant the crystalline melting point for crystalline polymers, being selected accordingly as the maximum deformation temperature.

By "fusion bondable" polymeric materials as employed herein is meant not cross-linked to the extent that the material cannot be readily bonded to itself or to another polymeric component by fusing. In general, the level of cross-linking in the polymeric material expressed in terms of gel content (ANSI/ASTM D2765—68) is preferably less than 40%, more preferably less than 20%, particularly less than 5%. When cross-linking in accordance with the process, preferably gel contents of at least 40%, e.g. at least 50%, particularly at least 65% are attained.

According to another aspect the invention provides a marker sleeve assembly comprising a web of heat-recoverable polymeric material bonded to itself or to at least one other polymeric web to define a plurality of radially inwardly heat-recoverable marker sleeves that are disposed in side-by-side relationship, the marker sleeves being capable of receiving printed characters and being separable, and the bond-forming parts of the web(s) being cross-linked to each other.

One advantage of the marker sleeves of the invention is that they are substantially recoverable, e.g. recoverable to at least 50% of their maximum extent, at a temperature below the softening point of the polymeric material from which they have been produced, e.g. in the range 60°C to the softening point.

Any cross-linkable polymeric material to which the property of dimensional recoverability may be imparted such as those disclosed in U.K. Patent Specification No. 990,235 may be used to form the articles. Polmers which may be used in the polymeric material include polyolefins such as polyethylene and polypropylene, and ethylene copolymers, for example with propylene, butene, hexene, octene, vinyl acetate or other vinyl esters or methyl or ethyl acrylate, polyamides, polyurethanes, polyvinyl chloride, polyvinylidine fluoride, or other fluorinated polymers or copolymers, e.g. Tefzel (trade name — commercially available from DuPont), elastomeric materials such as those disclosed in UK Patent specification No. 1,010,064 and blends such as those disclosed in UK Patent specification Nos. 1,284,082 and 1,294,665, and compositions such as those disclosed in our German Patent applications Nos. 2,815,520 and 2,914,014. The polymeric materials can be tailored to suit the intended use by the addition of fillers or other additives, e.g. flame retardants, plasticisers, pigments, stabilisers and lubricants.

The polymeric material may be cross-linked by irradiation, for example, by means of an electron beam or by γ-radiation or it may be chemically cross-linked. Whichever cross-linking process is used, it may be advantageous to incorporate one or more co-during agents for example polyunsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical cross-linking that may be used in the process according to the invention involves grafting an unsaturated hydrolysable silane on the polymer and subjecting the article to moisture during a curing stage, for example, as described in UK Patent specification Nos. 1,286,460 and 1,357,549.

Any of the techniques conventionally employed for fusing together polymeric materials may be employed in the process of the present invention, e.g. radio frequency ultrasonic or hot bar welding, and pressure may additionally by applied to ensure a satisfactory bond. Furthermore, it is possible to make use of the fusing operation to provide lines of weakness, e.g. perforations between the marker sleeves of the assembly. For example, it is possible to use a heating/perforating device such as a welding tool provided with a toothed wheel, if necessary in association with pressure applying means such as a roller.

The wall thickness of the marker sleeves may vary, e.g. from 0.01 to 3 mm prior to heat-recovery, preferably from 0.1 to 1 mm.

Specific embodiments of the process of the invention will now be described by way of example with specific reference to the accompanying drawings wherein:

Figure 1 is a schematic side view of a marker sleeve assembly in accordance with a first embodiment of the invention,

Figure 2 shows a section through the assembly of Figure 1,

Figure 3 is a side view of a single marker sleeve detached from the assembly of Figure 1,

Figure 4 is a schematic side view of a marker sleeve assembly in accordance with a second embodiment of the invention,

Figure 5 shows a section through the assembly of Figure 4,

Figure 6 is a schematic side view of a single marker sleeve detached from the assembly of Figure 4,

Figure 7 is a schematic side view of a marker sleeve assembly in accordance with a third embodiment of the invention,

Figure 8 shows a section through the assembly of Figure 7, and

Figure 9 is a side view of a single marker sleeve detached from the assembly of Figure 7.

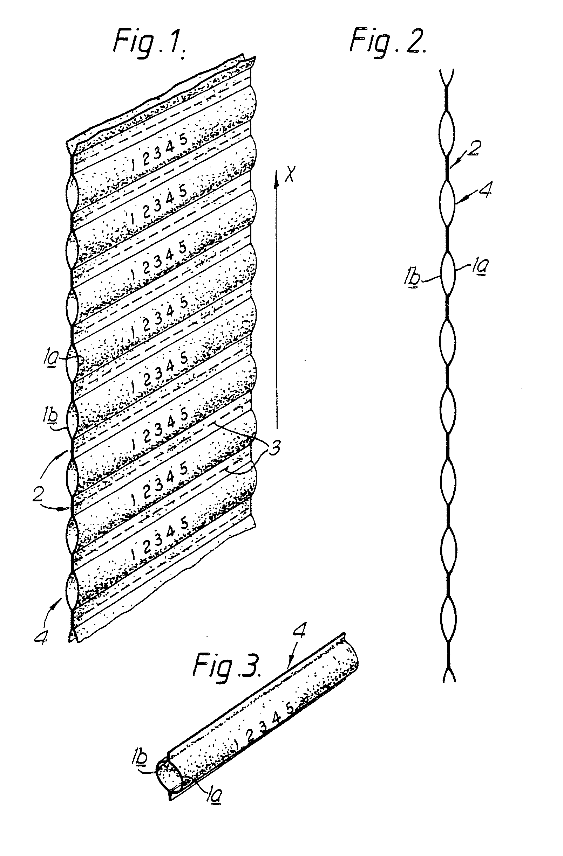

With reference to Figures 1, 2 and 3 the marker sleeve assembly of the first embodiment is produced from a pair of superimposed non-cross-linked polyethylene sheets each of which having been deformed by stretching in a longitudinal direction depicted in Figure 1 by arrow X at a temperature of 100°C and allowed to cool in the deformed condition. The superimposed deformed sheets are welded together laterally thereof with an RF welding tool to produce weld seams 2 and define a plurality of spaced apart marker sleeves 4. The assembly is provided with lines of weakness in the form of perforations 3 disposed along the weld seams 2 to facilitate removal of individual sleeves 4. Forms of marker sleeve assembly so produced are described and claimed in our divisional European Patent Application EP—A—138258). The assembly is thereafter irradiated with a 1.5 MeV electron beam at a dosage of 12 Mrads causing cross-linking of the polyethylene. The assembly of blank marker sleeves may be provided with appropriate markings, e.g. by use of a normal typewriter.

The resulting marker sleeve assembly is simply produced yet provides a sequenced series of heat-recoverable marker sleeves which may be employed for identifying purposes in manner known *per se*.

In a modification (not shown) of the first embodiment to enable the marker sleeve assemblies when provided with identifying markings, e.g. from a typewriter, to be subjected to a heat treatment to fix or render permanent the markings on the sleeves, each assembly is provided with a support means in the form of a polymeric non-heat-recoverable polymeric strip which remains at least semi-rigid at the heat treatment temperature, attached to at least each extremity of the assembly. Such attachment may be achieved by the use of mechanical attachment means e.g. clips, or may be welded to the assembly prior to cross-linking at least to the terminal sleeves of the assembly.

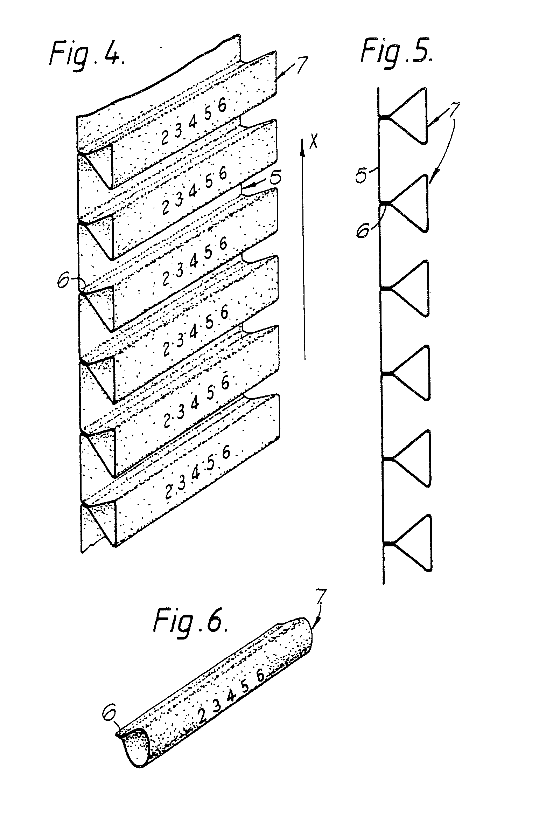

In the second embodiment illustrated in Figures 4, 5 and 6, the assembly is produced from a single sheet of non-cross-linked longitudinally expanded polyethylene sheets, i.e. expanded in the direction indicated by arrow X in Figure 4, produced in analogous manner to that described in the first embodiment, the sheet being transversely folded at longitudinally spaced apart intervals and each fold being welded employing an RF welding tool along the base thereof to produce weld seams 6 and thereby define a plurality of interlinked laterally disposed spaced apart sleeves 7. Between each sleeve 7 so produced and the interlinking polyethylene sheet along the weld seams 6 are provided lines of weakness in the form of a line of perforations to permit a tear-off arrangement and facilitate detachment of individual sleeves. The assembly so produced is subjected to electron irradiation and thereafter provided with identifying characters in analogous manner to that described in relation to the first embodiment. It is no be noted that the assembly of the second embodiment permits a marker sleeve to be removed out of sequence, i.e. from any position in the assembly the assembly otherwise remaining intact.

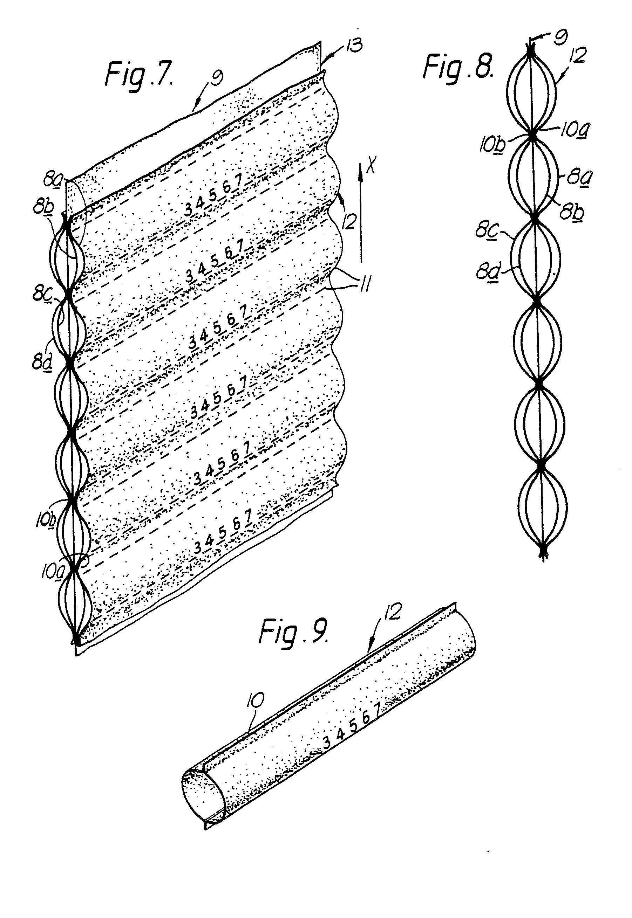

In the third embodiment illustrated in Figures 7, 8 and 9, two pairs of longitudinally expanded polyethylene sheets 8a and 8b, 8c and 8d (i.e. expanded in the direction indicated by arrow X) each produced in accordance with the procedure described in relation to the first embodiment are placed one pair on each side of a non-cross-linked semi-rigid polymeric support strip 9 in stacked relationship and each pair of polyethylene sheets 8a and 8b and 8c and 8d welded together and to each face of the polymeric support strip laterally thereof at spaced apart intervals employing an RF welding tool to produce welded seams 10a and 10b on each side of support strip 9 and to define a plurality of laterally disposed spaced apart marker sleeves 12 on each side of the support strip 9. Each weld seam 10a or 10b is provided with two rows of perforations in region of the seams not directly integral with the support strip to facilitate detachment of the marker sleeves. The relative width of the support strip 9 and polymeric sheets 8 is such that the marker sleeves protrude slightly from one side edge 13 of the support strip to provide a convenient securing tab to facilitate removal of the sleeves. The assembly is then subjected to electron irradiation as described in relation to the first embodiment, the assembly then being in a condition to accept markings, e.g. by way of a typewriter and to undergo heat treatment to render permanent the markings. It should be noted that the polymeric material of the support strip 9 is selected such that it will remain sufficiently rigid at the heat treatment temperature as to prevent premature heat-recovery of the marker sleeves.

It is to be noted that apart from allowing heat treatment to render permanent markings on the sleeves, the assembly also has a high density of marker sleeves and permits any marker sleeve to be detached whilst otherwise remaining intact.

In a modification of the third embodiment (not shown), the support strip extends proud of the marker sleeves on the side thereof opposite to side 13 to expose one edge region thereof.

Along the edge region so exposed is provided a series of slots or apertures which are adapted to be engageable with the teeth of a sprocket mechanism to be advanceable through a printer e.g. a typewriter and to facilitate marking.

## Claims

1. A process for the production of a marker sleeve assembly comprising a plurality of marker sleeves that are capable of receiving printed characters, which comprises deforming a fusion-bondable web (1a, 5, 8a, 8d) of polymeric material at a temperature below the softening point of the material to render the web heat-recoverable, bonding together, preferably by fusion bonding, parts of the web, or parts of the web and at least one other fusion-bondable polymeric web (1b, 8b, 8c) to define a plurality of radially inwardly heat-recoverable marker sleeves (4, 7, 12) that are disposed in side-by-side relationship and are separable, and cross-linking the resulting assembly so as to cross-link the bond-forming parts (2, 6, 10a, 10b) of the deformed web(s) to each other.

2. A process according to claim 1 wherein lines of weakness (3) are introduced into the assembly, facilitating detachment of individual sleeves (4, 7, 12).

3. A process according to claim 2 wherein said lines of weakness (3) comprise perforations.

4. A process according to any one of the preceding claims wherein a pair of longitudinally expanded fusion bondable polymeric sheets (1a, 1b, 8a, 8b) are superimposed and welded together laterally thereof at longitudinally spaced apart intervals.

5. A process according to claim 4 wherein said pair of polymeric sheets (8a, 8b) are attached to a non-heat-recoverable support means (9) to restrain heat-recovery of the marker sleeves (12) under heat treatment.

6. A process according to claim 5 wherein the support means (9) is in the form of a polymeric strip and said polymeric sheets (8a, 8b) are attached at least at the extremities thereof to the support means.

7. A process according to claim 5 wherein the polymeric sheets (8a, 8b) are welded together and to the support means (9) laterally of the sheets at longitudinally spaced apart intervals.

8. A process according to any one of claims 5, 6 or 7 wherein a pair of polymeric sheets (8a, 8b; 8c, 8d) is attached to each surface of the support means (9).

9. A process according to any one of claims 1 to 3 wherein a longitudinally expanded fusion-bondable polymeric sheet (5) is filded laterally thereof at longitudinally spaced apart intervals and each fold welded laterally along the base (6) thereof to produce a plurality of spaced apart laterally extending marker sleeves (7).

10. A marker sleeve assembly comprising a web (1a, 5, 8a, 8d) of heat-recoverable polymeric material bonded to itself or to at least one other polymeric web (1b, 8b, 8c) to define a plurality of radially inwardly heat-recoverable marker sleeves (4, 7, 12) that are disposed in side-by-side relationship, the marker sleeves being capable of receiving printed characters and being separable, and the bond-forming parts (2, 6, 10a, 10b) of the web(s) being cross-linked to each other.

11. An assembly according to claim 10 wherein the sleeves (4, 12) are formed by a pair of superimposed longitudinally expanded polymeric sheets (1a, 1b, 8a, 8b, 8c, 8d) bonded together laterally thereof at longitudinally spaced apart intervals.

12. An assembly according to claim 10, wherein the sleeves (12) are attached to a non-heat-recoverable support (9) to restrain heat-recovery· of the sleeves under heat treatment.

13. An assembly according to claim 12 wherein the support (9) is a polymeric strip and the sleeves (12) are bonded thereto at the positions of the sleeve-forming bonds.

14. An assembly according to claim 13 having a plurality of the said sleeves (12) bonded to each surface of the support.

15. An assembly according to any one of claims 10 to 14, which includes a retaining spine extending along an edge of the assembly.

16. An assembly according to claim 11, wherein one of the polymeric sheets is wider than the other so that an edge region of the wider sheet provides a retaining spine extending along an edge of the assembly.

17. An assembly according to any one of claims 10 to 16, which is provided longitudinally thereof with a plurality of indexing slots or apertures.

18. An assembly according to claim 17, which includes a longitudinally extending spine or support strip, the indexing slots or apertures being provided in the spine or support strip.

19. An assembly according to any one of claims 10 to 18, which includes lines of weakness (3) to facilitate detachment of individual sleeves (4).

## Revendications

1. Procédé de production d'un ensemble de manchons d'identification comprenant plusieurs manchons d'identification qui sont susceptibles de recevoir des caractères imprimés, qui consiste à déformer, à une température inférieure au point de ramollissement de la matière, une bande, soudable par fusion, de matière polymère, afin de rendre la bande susceptible de restauration par la chaleur, à souder ensemble, de préférence par soudage par fusion, des parties de la bande, ou des parties de la bande et au moins une autre bande polymère soudable par fusion (1b, 8b, 8c) afin de délimiter plusieurs manchons d'identification à capacité de restauration à la chaleur dans le sens radial vers l'intérieur (4, 7, 12) qui sont disposés suivant un agencement côte à côte et sont séparables, et à réticuler l'ensemble résultant de manière à réticuler l'une sur l'autre les parties formant l'assemblage (2, 6, 10a, 10b) de la (des) bande(s) déformée(s).

2. Procédé selon la revendication 1, dans lequel des lignes d'affaiblissement (3) sont introduites dans l'ensemble, facilitant un détachement de manchons individuels (4, 7, 12).

3. Procédé selon la revendication 2, dans lequel lesdites lignes d'affaiblissement (3) comprennent des perforations.

4. Procédé selon l'une quelconque des revendications précédentes, dans lequel une paire de feuilles polymères soudables par fusion et étirées longitudinalement (1a, 1b, 8a, 8b) sont superposées et soudées ensemble suivant leur sens latéral, à des intervalles espacés longitudinalement.

5. Procédé selon la revendication 4, dans lequel ladite paire de feuilles polymères (8a, 8b) sont fixées sur un moyen de support non susceptible de restauration à la chaleur (9) afin de restreindre la restauration à la chaleur des manchons d'identification (12) sous un traitement thermique.

6. Procédé selon la revendication 5, dans lequel le moyen de support (9) se présente sous la forme d'un ruban polymère et lesdites feuilles polymères (8a, 8b) sont fixées au moins à leurs extrémités sur le moyen de support.

7. Procédé selon la revendication 5, dans lequel les feuilles polymères (8a, 8b) sont soudées ensemble et sur le moyen de support (9) dans le sens latéral des feuilles et à des intervalles espacés longitudinalement.

8. Procédé selon l'une quelconque des revendications 5, 6 ou 7, dans lequel une paire de feuilles polymères (8a, 8b; 8c, 8d) est fixée sur chaque surface du moyen de support (9).

9. Procédé selon l'une quelconque des revendications 1 à 3, dans lequel une feuille polymère soudable par fusion et étirée longitudinalement (5) est pliée suivant son sens latéral à des intervalles espacés longitudinalement et chaque pli est soudé latéralement le long de la base (6) de celui-ci de produire une série de manchons d'identification s'étendant latéralement et espacés (7).

10. Ensemble de manchons d'identification comprenant une bande (1a, 5, 8a, 8d) de matière polymère à capacité de restauration à la chaleur soudée sur elle-même ou sur au moins une autre bande polymère (1b, 8b, 8c) afin de délimiter plusieurs manchons d'identification à capacité de restauration à la chaleur dans le sens radial vers l'intérieur (4, 7, 12) qui sont disposés suivant un agencement côte à côte, les manchons d'identification étant susceptibles de recevoir des caractéres imprimés et étant séparables, et les parties formant l'assemblage (2, 6, 10a, 10b) de la (des) bande(s) étant réticulées l'une avec l'autre.

11. Ensemble selon la revendication 10, dans lequel les manchons (4, 12) sont formés par une paire de feuilles polymères étirées longitudinalement et superposées (1a, 1b, 8a, 8b, 8c, 8d) soudées ensemble suivant leur sens latéral et à des intervalles espacés longitudinalement.

12. Ensemble selon la revendication 10, dans lequel les manchons (12) sont fixés sur un support sans capacité de restauration à la chaleur (9) afin de restreindre la resturation à la chaleur des manchons lors d'un traitement thermique.

13. Ensemble selon la revendication 12, dans lequel le support (9) est un ruban polymère et les manchons (12) sont soudés sur celui-ci aux emplacements des assemblages formant les manchons.

14. Ensemble selon la revendication 13, présentant pluseurs desdits manchons (12) soudés sur chaque surface du support.

15. Ensemble selon l'une quelconque des revendications 10 à 14, qui comprend une baguette de retenue s'étendant le long d'un bord le l'ensemble.

16. Ensemble selon la revendication 11, dans lequel l'une des feuilles polymères est plus large que l'autre si bien qu'une région de bord de la feuille la plus large constitue une baguette de retenue s'étendant le long d'un bord de l'ensemble.

17. Ensemble selon l'une quelconque des revendications 10 à 16, qui est muni suivant le sens de sa longueur d'une série de fentes ou ouvertures d'indexation.

18. Ensemble selon la revendication 17, qui comprend un ruban de support ou baguette s'étendant longitudinalement, les fentes ou ouvertures d'indexation étant prévues dans la bande de support ou baguette.

19. Ensemble selon l'une quelconque des revendications 10 à 18, qui comprend des lignes d'affaiblissement (3) afin de faciliter un détachement de manchons individuels (4).

## Patentansprüche

1. Verfahren zum Herstellen einer Markierungstüllenanordnung, die eine Mehrzahl von Markierungstüllen aufweist, die gedruckte Zeichen aufnehmen können, bei dem eine schmelzverbindbare Bahn (1a, 5, 8a, 8d) aus polymerem Material bei einer Temperatur unterhalb des Erweichungspunktes des Materials verformt wird, um die Bahn wärmeerholbar zu machen, bei dem vorzugsweise durch Schmelzverbindung Teile der Bahn oder Teile der Bahn und wenigstens eine andere schmelzverbindbare polymere Bahn (1b, 8b, 8c) miteinander verbunden werden, um eine Mahrzahl von radial inneren wärmeerholbaren Markierungstüllen (4, 7, 12) zu bilden, die in nebeneinanderliegender Zuordnung angeordnet und trennbar sind, und bei dem die erhaltene Anordnung vernetzt wird, so daß die verbindungsbildenden Teile (2, 6, 10a, 10b) der verformten Bahn(en) miteinander vernetzt werden.

2. Verfahren nach Anspruch 1, bei dem Schwächungslinien (3) in der Anordnung vorgesehen sind, um das Lösen der einzelnen Tüllen (4, 7, 12) zu erleichtern.

3. Verfahren nach Anspruch 2, bei dem die Schwächungslinien (3) Perforationen aufweisen.

4. Verfahren nach einem der vorangehenden Ansprüche, bei dem ein paar von in Längsrichtung expandierten schmelzverbindbaren, polymeren Folien (1a, 1b, 8a, 8b) übereinandergelegt und miteinander an in Längsrichtung in Abstand liegenden Intervallen quer verschweißt werden.

5. Verfahren nach Anspruch 4, bei dem ein paar polymerer Folien (8a, 8b) an einer nicht-wärmeerholbaren Trageinrichtung (9) angebracht ist, um die Wärmeerholung der Markierungstüllen (12) bei der Wärmebehandlung zu hemmen.

6. Verfahren nach Anspruch 5, bei dem die Trageinrichtung (9) in Form eines polymeren Streifens vorhanden ist und bei dem die polymeren Folien (8a, 8b) wenigstens an ihren Enden an der Trageinrichtung angebracht sind.

7. Verfahren nach Anspruch 5, bei dem die polymeren Folien (8a, 8b) miteinander und mit der Trageinrichtung (9) quer zu den Folien an in Längsrichtung in Abstand liegenden Intervallen verschweißt werden.

8. Verfahren nach einem der Ansprüche 5, 6 oder 7, bei dem ein paar polymerer Folien (8a, 8b; 8c, 8d) an jeder Fläche der Trageinrichtung (9) angebracht ist.

9. Verfahren nach einem der Ansprüche 1 bis 3, bei dem eine in Längsrichtung expandierte, schmelzverbindbare polymere Folie (5) in Querrichtung an in Längsrichtung in Abstand liegenden Intervallen gefaltet wird und bei dem jede Faltung quer längs der Basis (6) geschweißt wird, um eine Mehrzahl von in Abstand angeordneter, quer verlaufender Markierungstüllen (7) herzustellen.

10. Anordnung von Markierungstüllen, die eine Bahn (1a, 5, 8a, 8b) aus wärmeerholbarem, polymerem Material aufweist, das mit sich selbst oder wenigstens an anderen polymeren Bahnen (1b, 8b, 8c) verbunden ist, um eine Mahrzahl von radial inneren wärmeerholbaren Markierungstüllen (4, 7, 12) zu bilden, die in nebeneinanderliegender Zuordnung angeordnet sind, wobei die Markierungstüllen gedruckte Zeichen aufnehmen und getrennt werden können und wobei die verbindungsbildenden Teile (2, 6, 10a, 10b) der Bahn(en) miteinander vernetzt sind.

11. Anordnung nach Anspruch 10, bei der die Tüllen (4, 12) von einem paar übereinandergelegter, in Längsrichtung verlaufender polymerer Folien (1a, 1b, 8a, 8b, 8c, 8d) gebildet werden, die in Querrichtung an in Längsrichtung in Abstand liegenden Intervallen miteinander verbunden sind.

12. Anordnung nach Anspruch 10, bei der die Tüllen (12) an einem nicht-wärmeerholbaren Träger (9) angebracht sind, um die Wärmeerholung der Tüllen bei der Wärmebehandlung zu hemmen.

13. Anordnung nach Anspruch 12, bei der der Träger ein polymerer Streifen ist und die Tüllen (12) mit diesem an Stellen der Tüllen bildenden Verbindung verbunden sind.

14. Anordnung nach Anspruch 13, die eine Mehrzahl solcher Tüllen (12) hat, die mit jeder Fläche des Trägers verbunden sind.

15. Anordnung nach einem der Ansprüche 10 bis 14, welche einen Haltedorn enthält, der sich längs eines Rands der Anordnung erstreckt.

16. Anordnung nach Anspruch 11, bei der eine der polymeren Folien breiter als die andere ist, so daß ein Randbereich der breiteren Folie einen Haltedorn bildet, der sich längs eines Randes der Anordnung erstreckt.

17. Anordnung nach einem der Ansprüche 10 bis 16, die in ihrer Längsrichtung mit einer Mehrzahl von Teilschlitzen oder -öffnungen versehen ist.

18. Anordnung nach Anspruch 17, welche einen in Längsrichtung verlaufenden Dorn oder Trägerstreifen aufweist, wobei die Teilschlitze oder -öffnungen in dem Dorn oder dem Trägerstreifen vorgesehen sind.

19. Anordnung nach einem der Ansprüche 10 bis 18, welche Schwächungslinien (3) enthält, um das Lösen der einzelnen Tüllen (4) zu erleichtern.

Fig.1.

Fig.2.

Fig.3.

Fig. 4.

Fig. 5.

Fig. 6.

Fig.7.

Fig.8.

Fig.9.